# FASCICULE DE BREVET EUROPEEN

(11) **EP 0 456 536 B1**
(45) Date de publication et mention de la délivrance du brevet: **12.10.1994**
(21) Numéro de dépôt: 91401005.3
(22) Date de dépôt: 16.04.1991
(51) Int. Cl.: F16G 1/14, B21C 47/00

(54) **Courroie pour dispositif de freinage d'une installation de refendage de bandes métalliques**
Riemen für die Bremsvorrichtung einer Längsteilanlage für Metallbänder
Belt for the braking device in a metallic strips slitting mill

(30) Priorité: 09.05.1990 FR 9005782
(43) Date de publication de la demande: 13.11.1991
(73) Titulaire: Société AUXMET, F-60530 Neuilly en Thelle (FR)
(72) Inventeur: Gaudin, Jean, F-95370 Montigny les Cormeilles (FR)
(74) Mandataire: Armengaud Ainé, Alain

(56) Documents cités:
- FR-A- 2 163 910
- GB-A- 540 836
- GB-A- 2 072 152
- US-A- 3 735 937
- US-A- 4 572 359
- PATENT ABSTRACTS OF JAPAN, vol. 12, no. 227 (M-713)[3074], 28 juin 1988;& JP-A-63 023 045

## Description

La présente invention est relative à une courroie notamment pour un dispositif de freinage d'une installation de refendage de bandes de métaux.

On connaît (US-A-3 735 937) des installations de refendage de bandes métalliques qui comportent un dispositif de tension permettant de freiner simultanément et sans frottement un ensemble de bandes se présentant à l'enroulement sur un même tambour, dans lequel l'effort de freinage nécessaire est transmis à deux nappes de courroies sans fin entre lesquelles passent les bandes de façon que les courroies puissent présenter des vitesses différentes, respectivement égales aux vitesses de bandes refendues devant être freinées. On pourra notamment se reporter à la demande de brevet européen N° 90 402 844.6 déposée le 11 octobre 1990 (correspondant à la publication EP-A-427 580).
par la présente titulaire qui décrit une installation de refendage de bandes dans laquelle l'effort de freinage est d'une part appliqué directement sur les courroies de la nappe supérieure à l'aide d'un plateau de serrage supérieur et d'autre part sur la nappe inférieure par l'intermédiaire d'un plateau de serrage inférieur constitué d'une pluralité de tubes dont le nombre et la surface supérieure sont identiques à ceux des courroies, les tubes étant recouverts à une feuille d'usure de grande dureté transmettant l'effort de freinage aux courroies de la nappe inférieure.

Dans une telle installation, les courroies doivent être entraînées sur une face par les bandes refendues et doivent, sur leur autre face, glisser en continu sur les plateaux de serrage. Elles doivent donc présenter d'une part un coefficient de frottement élevé par rapport aux bandes refendues et d'autre part un faible coefficient de frottement par rapport aux plateaux de serrage, ce qui constitue des exigences contradictoires. Dans ces conditions, les courroies actuellement réalisées pour de telles installations ne donnent pas complète satisfaction car leur durée de vie est limitée et leur mise en oeuvre ne permet pas des vitesses d'utilisation élevées, en raison notamment d'une mauvaise résistance à la température du matériau de frottement des courroies.

Cette invention se propose en conséquence d'apporter des courroies du type ci-dessus, mais perfectionnées de manière à pallier les inconvénients des solutions selon la technique antérieure.

Cette invention a donc pour objet une courroie pour dispositif de freinage d'une installation de refendage de bandes métalliques qui comporte un dispositif de tension assurant un freinage simultané et sans frottement d'un ensemble de bandes se présentant à l'enroulement sur un mini tambour dans lequel l'effort de freinage est transmis à deux nappes de courroires sans fin entre lesquelles passent les bandes, caractérisé en ce que la face de chaque courroie au contact des bandes refendues est en polyuréthane, présentant un coefficient de frottement de 0,25 par rapport à la surface desdites bandes, la face de chaque courroie au contact des plateaux de freinage est en polytétrafluoréthylène présentant un coefficient de frottement de 0,1 par rapport à la surface desdits plateaux.

Selon un exemple de réalisation préféré de la présente invention, l'épaisseur de la face de la courroie réalisée en polyuréthane est de l'ordre de 2 mm et celle de la face en polytétra-fluoréthylène est de l'ordre de 1 mm.

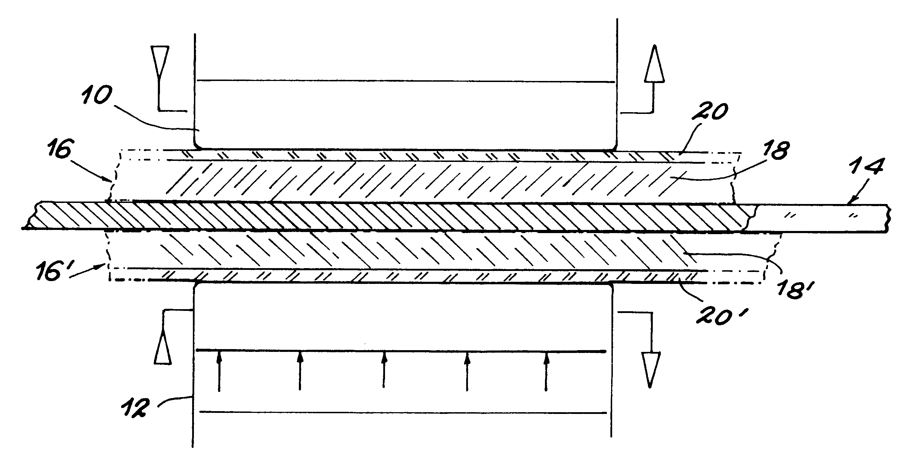

D'autres caractéristiques et avantages de la présente invention ressortiront de la description faite ci-après en référence au dessin annexé dont la figure unique est une vue schématique en coupe verticale d'une installation de refendage de bandes munie d'un dispositif de freinage conforme à la demande de brevet européen précité et comportant des nappes de courroies selon la présente invention.

Sur la figure, on voit en 10 et 12, les plateaux de freinage ou de serrage du dispositif de freinage, réalisés sous la forme de caissons creux, refroidis à l'eau, comme décrit dans la demande de brevet européen ci-dessus. L'énergie de freinage est transmise aux bandes métalliques refendues telles que 14 par l'intermédiaire des nappes de courroies supérieure 16 et inférieure 16'. On se reportera à la demande européenne susmentionnée en ce qui concerne la réalisation pratique et le fonctionnement de cette installation de freinage.

Conformément à l'invention, chaque courroie 16 ou 16' est de type composite en ce sens qu'elle est constituée dans son épaisseur de deux matériaux distincts, d'une part de polyuréthane et, d'autre part de polytétrafluoréthylène ("TEFLON"). Comme on le voit sur la figure, la face 18, 18' de chaque courroie 16, 16' au contact des bandes 14 est en polyuréthane, présentant un coefficient de frottement de 0,25 et une bonne résistance à la température engendrée par le frottement des courroies, et la face 20, 20' de chaque courroie au contact des plateaux de freinage 10, 12 est en polytétrafluoréthylène ("TEFLON") ayant un coefficient de frottement de 0,1.

Selon un exemple de réalisation préféré, la face 18, 18' de chaque courroie 16, 16' réalisée en polyuréthane présente une épaisseur de l'ordre de 2 mm et l'épaisseur de chaque face 20, 20' réalisée en polytétrafluoréthylène ("TEFLON") est de l'ordre de 1 mm.

Selon cette invention, le polytétrafluoréthylène peut être chargé de verre pour éviter le fluage au glissement sous pression.

On comprend que les bandes refendues telles que 14 entraînent les courroies 16, 16' selon l'invention, étant donné que le coefficient de frottement des faces 18, 18' entre les bandes et les courroies est élevé alors que les autres faces respectives 20, 20' des courroies présentent un faible coefficient de frottement et glissent en continu sur les plateaux de freinage 10, 12.

Grâce à cette réalisation originale des courroies, on peut obtenir des vitesses d'utilisation élevées de l'installation de refendage, qui peut atteindre 400 mètres par minute avec une durée de vie des courroies très améliorée par rapport aux courroies actuelles, étant donné que l'on peut garantir une durée normale de 2 000 heures d'utilisation, ces vitesses élevées étant obtenues notamment grâce à la bonne tenue à la température des courroies réalisées conformément à la présente invention.

## Revendications

1. Courroie (16, 16') pour dispositif de freinage d'une installation de refendage de bandes métalliques qui comporte un dispositif de tension assurant un freinage simultané et sans frottement d'un ensemble de bandes se présentant à l'enroulement sur un mini tambour dans lequel l'effort de freinage est transmis à deux nappes de courroies sans fin entre lesquelles passent les bandes, caractérisée en ce que la face (18, 18') de chaque courroie (16, 16') au contact des bandes refendues (14) est en polyuréthane, présentant un coefficient de frottement de 0,25 par rapport à la surface desdites bandes, la face (20, 20') de chaque courroie au contact des plateaux de freinage (10, 12) est en polytétrafluoréthylène présentant un coefficient de frottement de 0,1 par rapport à la surface desdits plateaux.

2. Courroie selon la revendication 1, caractérisée en ce que la face (18, 18') de chaque courroie (16, 16') réalisée en polyuréthane possède une épaisseur de l'ordre de 2 mm et l'épaisseur de chaque face (20, 20') réalisée en polytétrafluoréthylène est de l'ordre de 1 mm.

3. Courroie selon l'une des revendications 1 ou 2, caractérisée en ce que le polytétrafluoréthylène peut être chargé de verre pour éviter le fluage au glissement sous pression.

## Claims

1. Belt (16, 16') for braking device of an apparatus for splitting metal bands, which comprises a tensioning device assuring simultaneous braking without friction of an assembly of bands offered up for reeling onto a mini-drum, in which the braking force is transmitted to two layers of endless belts, between which the bands pass, characterized in that the face (18, 18') of each belt (16, 16') in contact with the split bands (14) is of polyurethane, having a coefficient of friction of 0.25 with respect to the surface of said bands, the face (20, 20') of each belt in contact with the brake shoes (10, 12) is of polytetrafluorethylene having a coefficient of friction of 0.1 with respect to the surface of said shoes.

2. Belt according to Claim 1, characterized in that the face (18, 18') of each belt (16, 16') made of polyurethane has a thickness of the order of 2 mm and the thickness of each face (20, 20') made of polytetraflurethylene is of the order of 1 mm.

3. Belt according to one of Claims 1 or 2, characterized in that the polytetrafluorethylene may contain glass filler for preventing flow during sliding under pressure.

## Patentansprüche

1. Riemen (16, 16') für die Bremsvorrichtung einer Anlage zum Spalten und Schneiden von Metallbändern, die eine Spannvorrichtung aufweist, die ein gleichzeitiges und reibungsfreies Bremsen eines Satzes von auf einer Minitrommel zur Aufwicklung gelangenden Bändern sicherstellt, wobei die Bremskraft über in zwei Schichten angeordnete Endlosriemen übertragen wird, zwischen denen die Bänder durchlaufen,
dadurch **gekennzeichnet**,
daß die Seite (18, 18') jedes Riemens (16, 16'), die mit den gespaltenen Bändern (14) in Kontakt ist, aus Polyurethan besteht, einen Reibungskoeffizienten von 0,25 im Verhältnis zur Oberfläche der Bänder aufweist, und daß die Seite (20, 20') jedes Riemens, die in Kontakt mit den Bremsplatten (10, 12) ist, aus Polytetrafluorethylen mit einem Reibungskoeffizienten von 0,1 im Verhältnis zu der Oberfläche dieser Platten besteht.

2. Riemen nach Anspruch 1,
dadurch **gekennzeichnet**,
daß die Seite (18, 18') jedes Riemens (16, 16') aus Polyurethan eine Dicke von in etwa 2 mm besitzt und die Dicke jeder Seite (20, 20') aus Polytetrafluoretylen in etwa 1 mm beträgt.

3. Riemen nach Anspruch 1 oder 2,
dadurch **gekennzeichnet**,
daß das Polytetrafluorethylen mit Glas versetzt sein kann, um das plastische Fließen beim Gleiten unter Druck zu vermeiden.
